# EUROPÄISCHE PATENTSCHRIFT

(11) **EP 2 325 058 B1**
(45) Veröffentlichungstag und Bekanntmachung des Hinweises auf die Patenterteilung: **26.02.2014**
(21) Anmeldenummer: 10013907.0
(22) Anmeldetag: 23.10.2010
(51) Int. Cl.: B60R 19/34, B60R 19/18

(54) **Stoßfängeranordnung**
Bumper system
Agencement de pare-chocs

(30) Priorität: 20.11.2009 DE 102009053861
(43) Veröffentlichungstag der Anmeldung: 25.05.2011
(73) Patentinhaber: Benteler Automobiltechnik GmbH, 33102 Paderborn (DE)
(72) Erfinder: Handing, Christian, Dr., 33449 Langenberg (DE); Tatarinov, Konstantin, 33609 Bielefeld (DE); Roll, Michael, 32049 Herford (DE); Grewe, Jochem, 33154 Salzkotten (DE)
(74) Vertreter: Griepenstroh, Jörg

(56) Entgegenhaltungen:
- EP-A2- 1 837 245
- WO-A1-2007/035163
- DE-A1- 19 959 701
- DE-A1-102005 003 598
- FR-A1- 2 867 729
- US-A1- 2001 017 473

## Beschreibung

Die vorliegende Erfindung betrifft eine Stoßfängeranordnung mit einem Querträger und zwei Crashboxen, wobei die Crashboxen an jeweiligen Längsträgern festlegbar und mit an Endabschnitten des Querträgers ausgebildeten Anbindungsbereichen gekoppelt sind und ein Innensteg vorgesehen ist, der sich über den überwiegenden Teil der Länge zwischen einer Vorderwand und einer Rückwand des Querträgers erstreckt.

Stoßfängersysteme werden heute standardmäßig bei Kraftfahrzeugen an Vorder-und Rückseite eingebaut, um die Stoßenergie kleinerer Stöße so abzufangen, dass die eigentliche Tragstruktur des Autos möglichst nicht beschädigt wird. Dabei besteht ein Stoßfängersystem in der Regel aus einem Stoßenergie in Verformungsarbeit umwandelnden Bauteil, wie der Crashbox, und einem Querträger, der dazu dient, die aus einem Anprall resultierende Energie in die Crashbox einzuleiten. Das Stoßfängersystem wird dabei so aufeinander abgestimmt, dass die Crashbox stirnseitig mittig auf dem Längsträger des Kraftfahrzeugs sitzt und die Stoßenergie über den Querträger mit einem möglichst geringen Biegemoment in die Crashbox und damit auch in die Längsträger eingeleitet wird.

In einigen Anwendungsformen ist aus dem Stand der Technik ein als Zweikammerhohlprofil ausgelegter Querträger bekannt. Dieser wird auf die Crashboxen geschweißt oder mit diesen verschraubt. Bei der Durchführung von Crashtests spielt die Steifigkeit des Querträgers in Bezug auf das Verhalten der Crashboxen einen entscheidenden Einflussfaktor.

Stoßfängersysteme werden in verschiedenen Crashtests sowohl High-Speed-Tests als auch Low-Speed-Tests unterzogen. Bei Crashtests mit höherer Geschwindigkeit wird für den Querträger gerade im mittleren Bereich eine hohe Steifigkeit gefordert. Bei Crashtests mit geringerer Geschwindigkeit wird eine höhere Duktilität des Stoßfängersystems gefordert, das durch Crashboxen realisiert wird.

Die aus dem Stand der Technik bekannten Stoßfängeranordnungen verbinden daher ein optimiertes Crashverhalten sowohl im High-Speed- als auch im Low-Speed-Test. Nachteilig bei den bekannten Systemen ist allerdings, dass grundsätzlich eine Tendenz in Richtung beispielsweise hoher Steifigkeit für den Hochgeschwindigkeitstest oder guter Deformation für den Niedriggeschwindigkeitstest vorhanden ist. Eine optimierte Auslegung unter Bezugnahme auf die auftretende Beschleunigung durch einen Crash in Relation zu dem Deformationsweg ist mit den bekannten Stoßfängersystemen aus dem Stand der Technik nicht realisierbar.

Eine solche Stoßfängeranordnung ist durch die FR 2 867 729 A1 beschrieben. Hierbei wird die Stoßfängeranordnung durch ein Zweikammerhohlprofil und Crashboxen ausgebildet, welche durch entsprechende Öffnungen, die sich in den Endabschnitten des Querträgers befinden, an den Querträger gekoppelt werden. Die Crashboxen sind wiederum an die Längsträger eines Kraftfahrzeuges gekoppelt. Die Öffnungen zur Aufnahme der Crashboxen sind sowohl in der Rückwand als auch in dem Verbindungssteg des Querträgers vorgesehen.

Eine weitere Ausgestaltung eines Anbindungsbereiches eines Querträgers an eine Crashbox wird durch die WO 2007/035163 A1 offenbart. Hierbei wird ein hutprofilartiger Querträger von den Endabschnitten der Crashboxen derart umgriffen, so dass es durch eine Schraubverbindung zu einem formschlüssigen Verbund zwischen Stoßfänger und Crashboxen kommt.

Weitere Vorrichtungen zur Aufnahme von Querträgern werden sowohl durch die DE 199 59 701 A1 und die DE 10 2005 003 598 A1 gezeigt. In beiden Dokumenten werden Querträger über entsprechende Verbindungsabschnitte an die Crashboxen gekoppelt. Die Crashboxen weisen hierzu laschenartige Fortsätze auf, welche zur Koppelung des Querträgers an die Crashbox dienen.

Auch die EP 1 837 245 A2 beschreibt eine alternative Stoßfängeranordnung, welche aus einem Querträger und zwei Crashboxen gebildet wird. Hierbei ist der Querträger an sich hutprofilartig ausgebildet und wird durch ein Abschlussblech derart verschlossen, dass sich ein Hohlkörper ausbildet. Dieser Hohlkörper wird anschließend über eine Schraubverbindung ebenfalls an vorstehenden Laschen der Crashboxen fixiert.

Auch die US 2001/0017473 A1 zeigt eine weitere Ausgestaltung eines Querträgers. Hierbei besteht der Querträger aus einem im Wesentlichen rechteckig ausgebildeten Grundprofil, in dessen Innenbereich Verstärkungsprofile eingesetzt werden können, so dass die Steifigkeit bzw. die Deformationsfähigkeit des Querträgers erhöht wird.

Aufgabe der vorliegenden Erfindung ist es daher, eine Stoßfängeranordnung bereit zu stellen, mit der auf bereits vorhandene Produktionstechnologien von Stoßfängersystemen zurückgegriffen werden kann und die in Bezug auf ihr Crashverhalten sowohl im High-Speed- als auch im Low-Speed-Test in ihrem Deformationsverhalten optimal aufeinander abgestimmt sind.

Die vorliegende Aufgabe wird gemäß den Merkmalen des Patentanspruchs 1 gelöst, indem der Innensteg in dem Anbindungsbereich zur Crashbox eine Aussparung aufweist, wobei sich die Stegansätze in den Anbindungsbereich jeweils von einer Vorder- und Rückwand des Querträgers bis zur Ausspanung erstrecken.

Vorteilhafte Weiterbildungen der vorliegenden Erfindung werden durch die abhängigen Ansprüche 2 bis 10 realisiert.

Bei der erfindungsgemäßen Stoßfängeranordnung wird der Innensteg des Querträgers als Mittelsteg ausgebildet, so dass der Querträger ein Zweikammerhohlprofil ist. In den außenseitigen Endbereichen des Querträgers befinden sich die Anbindungsbereiche für die Crashboxen. Um nun ein optimales Kraftniveau für einen Versicherungseinstufungstest einzustellen, wird der Innensteg im Anbindungsbereich entfernt. Der Innensteg erstreckt sich somit über einen überwiegenden Teil der Länge des Querträgers zwischen den Crashboxen und erhöht dessen Steifigkeit.

Die Steifigkeit des Querträgers ist wichtig für das Deformationsverhalten bei einem Hochgeschwindigkeitscrash. Durch das Entfernen des Innenstegs kann sich der Querträger im Anbindungsbereich leichter einfalten, was eine höhere Duktilität der Anordnung für das Crashverhalten bei niedrigen Geschwindigkeiten begründet. Durch ein Aussparen des Innenstegs im Anbindungsbereich wird ebenfalls das Kraftniveau im Crashfall reduziert. Die Stoßfängeranordnung weist somit ein optimiertes Kraftniveau für ein optimiertes Absorptionsvermögen auf. Der Innensteg kann dabei beispielsweise aus Gewichtseinsparungsgründen auch Aussparungen über seine gesamte Länge aufweisen.

Die Stoßfängeranordnung weist in den Anbindungsbereichen innerhalb des Querträgers verbleibende Stegansätze auf, die in den Innensteg übergehen. Durch das Aussparen des Innenstegs können durch die Stegansätze wiederum Einstellungsoptionen entstehen, um eine Steifigkeit für die verschiedenen Anforderungen zu optimieren. Durch ein Vergrößern oder Verkleinern des Stegansatzes kann somit das Steifigkeitsverhalten des Querträgers justiert werden. Ein weiterer Vorteil dieser Ausführung ist eine besonders kostensparende Produktion, da beispielsweise ein Fräskopf während der Aussparung den Innensteg im Anbindungsbereich nicht vollständig entfernen muss.

In einer weiteren bevorzugten Ausführungsform überdeckt die Crashbox den Querträger mit mindestens einer Lasche, wobei die Lasche in Fahrzeuglängsrichtung orientiert ist. Zur Einstellung des optimalen Kraftniveaus wird eine Lasche als Verlängerung der Crashbox ausgebildet. Diese kann sowohl oberhalb als auch unterhalb des Querträgers angeordnet sein. Auch ist eine Anordnung von zwei Laschen an einer Crashbox, oberhalb und unterhalb des Querträgers, im Zuge der Erfindung realisierbar. Die Lasche kann in ihrer Größe so eingestellt werden, dass sich in Abstimmung mit dem Querträger ein optimales Deformationsverhalten ergibt.

Vorzugsweise erstreckt sich die Lasche auf dem Querträger bis zu einer Vorderwand des Querträgers. Durch die gesamte Überdeckung der Ober- bzw. Unterseite des Querträgers wird dieser in seinem Deformationsverhalten bzw. Faltverhalten beeinflusst. Es ergibt sich dadurch eine weitere Möglichkeit, die Stoßfängeranordnung optimal auf das geforderte Kraftniveau einzustellen. Die vollständige Überdeckung des Querträgers im Bereich der Lasche in Fahrzeuglängsrichtung ermöglicht somit auch eine optimale Abstimmung des Faltverhaltens der Ober- und Unterteile des Querträgers. Weiterhin bietet diese Ausführungsform den Vorteil, dass der Querträger durch kraftschlüssige, stoffschlüssige oder formschlüssige Verbindung und/oder in beliebiger Kombination der zuvor genannten Verbindungsverfahren mit der Crashbox verbunden werden kann.

In einer besonders bevorzugten Ausführungsform weist die Lasche mindestens eine Versteifungssicke auf. Im Wege der Abstimmung von Querträger, Crashbox und Lasche in Bezug auf das Deformationsverhalten bieten Versteifungssicken die Möglichkeit, die Lasche weiter zu versteifen. Es stellt sich in Folge eine höhere Steifigkeit des Querträgers in Fahrzeuglängsrichtung im Anbindungsbereich ein. Dies wirkt sich besonders auf den High-Speed-Test aus, da hier eine erhöhte Steifigkeit der Stoßfängeranordnung gefordert ist. Die Versteifungssicke kann dabei als prägende Struktur ausgebildet sein, die verschiedenste Geometrien aufweist, um eine Fläche, in Form einer Lasche, zu versteifen. Die Versteifung kann dabei als Versteifung in Fahrzeuglängsrichtung oder aber auch in Vertikalrichtung ausgebildet sein. Dadurch wird zum einen das Crashverhalten in Fahrzeuglängsrichtung beeinflusst, zum anderen das Ausdehnen der Ober- und Unterseite des Querträgers in vertikaler Richtung.

In einer besonders bevorzugten Ausführungsform erstreckt sich die Versteifungssicke von der Crashbox auf die Lasche. In der Gesamtabstimmung der Stoßfängeranordnung kann somit ein optimiertes Deformationsverhalten aller Komponenten aufeinander besonders gut abgestimmt werden. Weiterhin ist eine besonders kostengünstige Produktionsmöglichkeit von Crashbox mit integrierter Lasche und Versteifungssicke möglich, da diese beispielsweise als Formpressteil hergestellt werden und so nur einen Arbeitsschritt zur Herstellung benötigen.

Vorzugsweise weist der Querträger Aufnahmemulden für die Laschen auf. Ein sich hieraus ergebender Vorteil ist wiederum ein besonders einfacher Produktionsprozess sowie eine optimale Anbindungsmöglichkeit von der Crashbox an den Querträger. Die Anbindung kann beispielsweise durch stoffschlüssige, formschlüssige oder reibschlüssige Verbindung entstehen. Weiterhin kann je nach Crashanforderungsverhalten der Stoßfängeranordnung die Aufnahmemulde Versteifungen, Verdickungen und/oder Verhärtungen aufweisen. Diese erhöhen die Steifigkeit in Bezug auf ein Crashverhalten, beispielsweise eines Geländewagens in Relation zu einem Kleinwagen.

In einer vorteilhaften Ausführungsform der vorliegenden Erfindung bestehen die Laschen in Relation zu dem Werkstoff des Querträgers aus einem duktileren Werkstoff. Durch die Laschen der Crashbox, die den Querträger überlappen, wird ein kontrolliertes Einfalten der Querträgerober- und -unterseite während eines Crashs realisiert. Die Laschen der Crashbox sorgen dabei für ein kontrolliertes Einfalten, indem sie aus einem weicheren Werkstoff bestehen als der Querträger. Durch die duktile Werkstoffeigenschaft biegt sich die Lasche zäh, im Gegensatz zu dem harten Querträger, der ab einer bestimmten Krafteinwirkung ausknickt.

Vorzugsweise sind die Lasche und die Crashbox als separate Bauteile ausgebildet. Hierdurch bietet sich die Möglichkeit, Crashbox und Lasche aus verschiedenen Werkstoffen zu fertigen und optimal auf die jeweiligen Crashanforderungen abzustimmen. Ein weiterer Vorteil ist eine günstige Produktion, dadurch, dass die Lasche einzeln herstellbar ist und der, die Crashbox und die Lasche später gekoppelt werden.

In einer weiteren bevorzugten Ausführungsform sind die Crashboxen mit dem Querträger verschweißt und/oder verschraubt. Durch die Fügeverfahren des stoffschlüssigen Verbindens bzw. des formschlüssigen Verbindens oder der Kombination dieser beiden Verfahren kann wiederum eine optimierte Einstellung im Crashverhalten von Querträger und Crashbox vorgenommen werden. Beispielsweise kann die Lasche umseitig auf den Querträger verschweißt werden, so dass hierdurch eine zusätzliche Einstellungsmöglichkeit in der Steifigkeit und auch im Einfaltverhalten von Lasche und Querträger entsteht.

Vorzugsweise sind die Crashbox und der Querträger aus einem Aluminiumwerkstoff hergestellt. Die Kopplung von Crashbox mit dem Querträger erfolgt dabei durch thermisches Fügen, vorzugsweise durch Schweißen. Die Crashboxen können dabei in einschaliger oder auch zweischaliger oder mehrschaliger Bauweise hergestellt werden. In einer weiteren bevorzugten Ausführungsform ist der Querträger als rollgeformtes Bauteil herstellbar. Im Zuge der Erfindung kann eine optimierte Abstimmung von Querträger und Crashbox auch erfolgen, wenn beide Bauteile aus Stahl hergestellt sind.

Weitere Vorteile, Merkmale, Eigenschaften und Aspekte der vorliegenden Erfindung ergeben sich aus der folgenden Beschreibung, bevorzugte Ausführungsformen anhand der exemplarischen Zeichnungen. Diese diesen lediglich dem einfachen Verständnis der Erfindung. Es zeigen:
- Figur 1: eine perspektivische Draufsicht einer Stoßfängeranordnung;
- Figur 2: einen Querschnitt durch Crashbox und Querträger im Anbindungsbereich und
- Figur 3: eine perspektivische Detailansicht eines Querträgers mit Crashbox im Anbindungsbereich.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

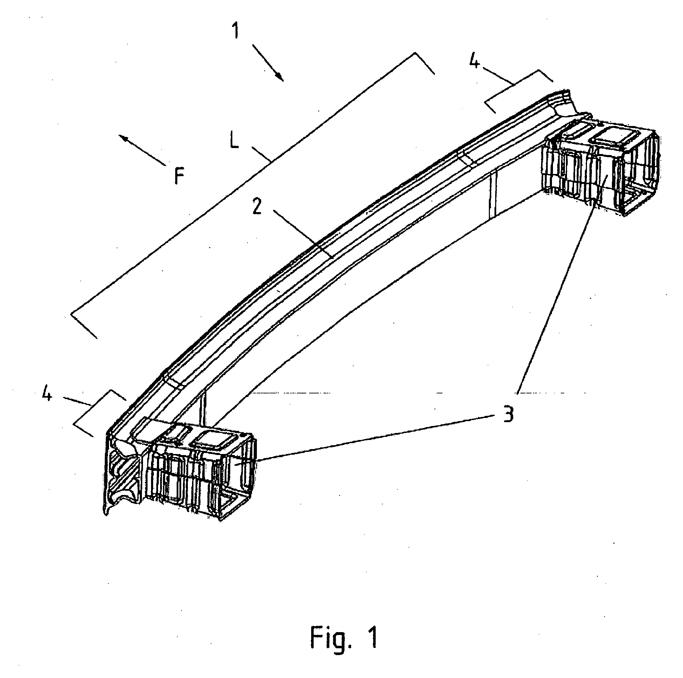

Figur 1 zeigt eine erfindungsgemäße Stoßfängeranordnung 1 mit einem Querträger 2 und zwei Crashboxen 3. Die Crashboxen 3 sind auf hier nicht näher dargestellten Längsträgern befestigt, so dass im Fall eines Crashs in Fahrzeuglängsrichtung F die Energie durch die Stoßfängeranordnung 1 über den Querträger 2 in die Crashboxen 3 geleitet wird, welche die Kraft wiederum in die Längsträger übertragen. Der Querträger 2 ist in Anbindungsbereichen 4 mit den Crashboxen 3 gekoppelt.

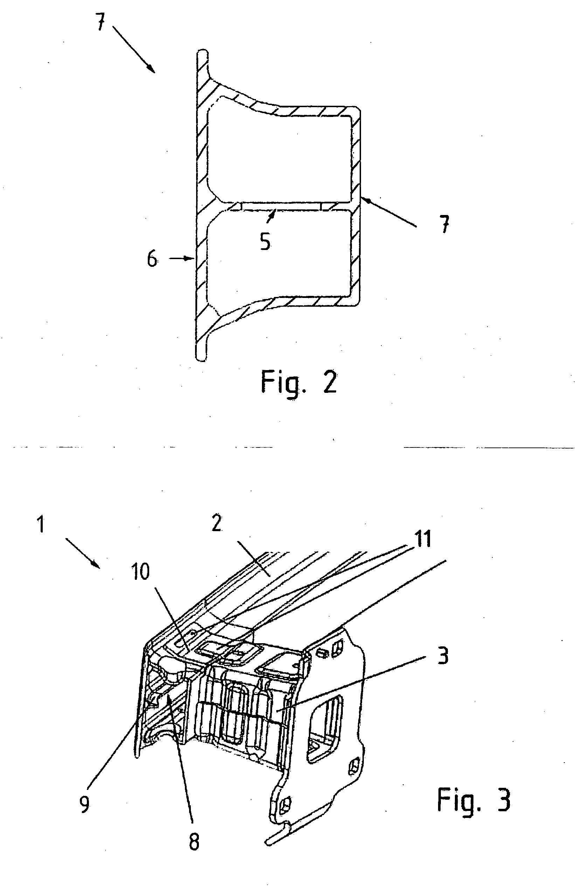

Figur 2 zeigt eine Schnittansicht einer Stoßfängeranordnung 1 im Bereich einer Crashbox 3. Dargestellt ist auf der linken Seite der Querträger 2 und auf der rechten Seite die Crashbox 3. Der Querträger 2 ist als Zweikammerhohlprofil mit einem Innensteg 5 ausgebildet. Der Querträger 2 weist dabei eine Vorderwand 6 und eine Rückwand 7 auf. Zwischen der Vorderwand 6 und der Rückwand 7 erstreckt sich über die Länge des Querträgers 2 zwischen den Crashboxen 3 der Innensteg 5. lm Bereich der Schnittdarstellung ist der Innensteg 5 als Stirnansicht dargestellt, da dieser im Anbindungsbereich eine Aussparung 8 aufweist.

Figur 3 zeigt eine perspektivische Teilansicht der erfindungsgemäßen Stoßfängeranordnung 1. Hierbei ist der Querträger 2 mit der Crashbox 3 in einem Anbindungsbereich 4 gekoppelt. Der Querträger 2 weist im Anbindungsbereich 4 die Aussparung 8 sowie Stegansätze 9 auf. Die Stegansätze 9 blieben als Reste des ausgenommenen Innenstegs 5 im Querträger 2 stehen. Die Crashbox 3 weist weiterhin Laschen 10 auf, die sich auf dem Querträger 2 bis zur Vorderwand 6 erstrecken. Die Laschen 10 selber weisen wiederum Versteifungsgeometrien auf, die hier als Versteifungssicken 11 ausgebildet sind.

### Bezugszeichen:

- 1 -: Stoßfängeranordnung
- 2 -: Querträger
- 3 -: Crashbox
- 4 -: Anbindungsbereich
- 5 -: Innensteg
- 6 -: Vorderwand zu 2.
- 7 -: Rückwand zu 2.
- 8 -: Aussparung
- 9 -: Stegansätze
- 10 -: Lasche
- 11 -: Versteifungssicke

- F -: Fahrzeuglängsrichtung
- L -: Länge zu 2.

## Patentansprüche

1. Stoßfängeranordnung (1), mit einem Querträger (2) und zwei Crashboxen (3), wobei die Crashboxen (3) an jeweiligen Längsträgern festlegbar und mit an Endabschnitten des Querträgers (2) ausgebildeten Anbindungsbereichen (4) gekoppelt sind und der Querträger (2) als Zweikammerhohlprofil mit einem Innensteg (5) ausgebildet ist und der Innensteg (5) sich über den überwiegenden Teil der Länge (L) zwischen einer Vorderwand (6) und einer Rückwand (7) des Querträgers (2) erstreckt, **dadurch gekennzeichnet, dass** der Innensteg (5) in dem Anbindungsbereich (4) eine Aussparung (8) aufweist wobei sich Stegansätze (9) in den Anbindungsbereich (4) des Querträgers (2) jeweils von der Vorderwand (6) und der Rückwand (7) bis zur Aussparung (8) erstrecken.

2. Stoßfängeranordnung nach Anspruch 1, **dadurch gekennzeichnet, dass** die in den Anbindungsbereichen (4) innerhalb des Querträgers (2) ausgebildeten Stegansätze (9) in den Innensteg (5) übergehen.

3. Stoßfängeranordnung nach einem der Ansprüche 1 oder 2, **dadurch gekennzeichnet, dass** die Crashbox (3) den Querträger (2) mit mindestens einer Lasche (10) überdeckt, wobei die Lasche (10) in Fahrzeuglängsrichtung (F) orientiert ist.

4. Stoßfängeranordnung nach Anspruch 3, **dadurch gekennzeichnet, dass** die Lasche (10) sich auf dem Querträger (2) bis zu der Vorderwand (6) erstreckt.

5. Stoßfängeranordnung nach einem der Ansprüche 3 oder 4, **dadurch gekennzeichnet, dass** die Lasche (10) mindestens eine Versteifungssicke (11) aufweist.

6. Stoßfängeranordnung nach Anspruch 5, **dadurch gekennzeichnet, dass** die Versteifungssicke (11) sich von der Crashbox (3) auf die Lasche (10) erstreckt.

7. Stoßfängeranordnung nach einem der Ansprüche 3 bis 6, **dadurch gekennzeichnet, dass** der Querträger (2) Aufnahmemulden für die Laschen (10) aufweist.

8. Stoßfängeranordnung nach einem der Ansprüche 3 bis 7, **dadurch gekennzeichnet, dass** die Laschen (10) in Relation zu dem Werkstoff des Querträgers (2) aus einem duktileren Werkstoff bestehen.

9. Stoßfängeranordnung nach einem der Ansprüche 3 bis 8, **dadurch gekennzeichnet, dass** die Lasche (10) und die Crashbox (3) als separate Bauteile ausgebildet sind.

10. Stoßfängeranordnung nach einem der voranstehenden Ansprüche, **dadurch gekennzeichnet, dass** die Crashboxen (3) mit dem Querträger (2) verschweißt und/oder verschraubt sind.

## Claims

1. Bumper arrangement (1), having a cross member (2) and two crash boxes (3), the crash boxes (3) being fixable to respective longitudinal supports and being coupled to connecting regions (4) formed on end portions of the cross member (2) and the cross member (2) being configured as a two-compartment hollow profile having an inner bar (5) and the inner bar (5) extending over the majority of the length (L) between a front wall (6) and a rear wall (7) of the cross member (2), **characterised in that** the inner bar (5) comprises a recess (8) in the connecting region (4), with bar projections (9) extending into the connecting region (4) of the cross member (2) from the front wall (6) and the rear wall (7) as far as the recess (8).

2. Bumper arrangement according to claim 1, **characterised in that** the bar projections (9) formed in the connecting regions (4) inside the cross member (2) merge into the inner bar (5).

3. Bumper arrangement according to one of claims 1 or 2, **characterised in that** the crash box (3) covers the cross member (2) with at least one flap (10), the flap (10) being oriented in the longitudinal direction (F) of the vehicle.

4. Bumper arrangement according to claim 3, **characterised in that** the flap (10) extends over the cross member (2) as far as the front wall (6).

5. Bumper arrangement according to one of claims 3 or 4, **characterised in that** the flap (10) comprises at least one reinforcement bead (11).

6. Bumper arrangement according to claim 5, **characterised in that** the reinforcement bead (11) extends from the crash box (3) onto the flap (10).

7. Bumper arrangement according to one of claims 3 to 6, **characterised in that** the cross member (2) comprises depressions for accommodating the flaps (10).

8. Bumper arrangement according to one of claims 3 to 7, **characterised in that** the flaps (10) consist of a more ductile material, in relation to the material of the cross member (2).

9. Bumper arrangement according to one of claims 3 to 8, **characterised in that** the flap (10) and the crash box (3) are configured as separate components.

10. Bumper arrangement according to one of the preceding claims, **characterised in that** the crash boxes (3) are welded and/or screwed to the cross member (2).

## Revendications

1. Aménagement de pare-chocs (1), comprenant une traverse (2) et deux boîtes de collision (3), dans lequel les boîtes de collision (3) peuvent être fixées sur des longerons respectifs et sont couplées à des zones de liaison (4) formées aux sections d'extrémité de la traverse (2) et la traverse (2) se présente sous la forme d'un profilé creux à deux chambres avec une cloison interne (5) et la cloison interne (5) s'étend sur la plus grande partie de la longueur (L) entre une paroi avant (6) et une paroi arrière (7) de la traverse (2), **caractérisé en ce que** la cloison interne (5) présente dans la zone de liaison (4) un évidement (8), dans lequel des épaulements (9) de la cloison s'étendent dans la zone de liaison (4) de la traverse (2), respectivement, de la paroi avant (6) et de la paroi arrière (7) jusqu'à l'évidement (8).

2. Aménagement de pare-chocs selon la revendication 1, **caractérisé en ce que** les épaulements (9) de la cloison formées dans la zone de liaison (4) à l'intérieur de la traverse (2) se fondent dans la cloison interne (5).

3. Aménagement de pare-chocs selon l'une quelconque des revendications 1 ou 2, **caractérisé en ce que** la boîte de collision (3) recouvre la traverse (2) par au moins une éclisse (10), dans lequel l'éclisse (10) est orientée dans la direction longitudinale (F) du véhicule.

4. Aménagement de pare-chocs selon la revendication 3, **caractérisé en ce que** l'éclisse (10) s'étend sur la traverse (2) jusqu'à la paroi avant (6).

5. Aménagement de pare-chocs selon l'une quelconque des revendications 3 ou 4, **caractérisé en ce que** l'éclisse (10) présente au moins une moulure de renfort (11).

6. Aménagement de pare-chocs selon la revendication 5, **caractérisé en ce que** la moulure de renfort (11) s'étend de la boîte de collision (3) sur l'éclisse (10).

7. Aménagement de pare-chocs selon l'une quelconque des revendications 3 à 6, **caractérisé en ce que** la traverse (2) présente des cavités réceptrices pour les éclisses (10).

8. Aménagement de pare-chocs selon l'une quelconque des revendications 3 à 7, **caractérisé en ce que** les éclisses (10) sont constituées d'un matériau plus ductile par rapport au matériau de la traverse (2).

9. Aménagement de pare-chocs selon l'une quelconque des revendications 3 à 8, **caractérisé en ce que** l'éclisse (10) et la boîte de collision (3) se présentent sous la forme de composants séparés.

10. Aménagement de pare-chocs selon l'une quelconque des revendications précédentes, **caractérisé en ce que** les boîtes de collision (3) sont soudées et/ou vissées à la traverse (2).
